# EUROPÄISCHE PATENTSCHRIFT

(11) **EP 3 117 904 B1**
(45) Veröffentlichungstag und Bekanntmachung des Hinweises auf die Patenterteilung: **19.08.2020**
(21) Anmeldenummer: 15177401.5
(22) Anmeldetag: 17.07.2015
(51) Int. Cl.: B04C 1/00, B04C 5/04, B04C 5/081, B04C 5/13, B04C 5/14

(54) **ABSCHEIDEVORRICHTUNG FÜR TEILCHEN AUS EINEM FLUIDSTROM**
APPARATUS FOR SEPARATING PARTICLES FROM A FLUID STREAM
DISPOSITIF DE SEPARATION POUR DE PETITES PARTIES D'UN FLUX DE FLUIDE

(43) Veröffentlichungstag der Anmeldung: 18.01.2017
(73) Patentinhaber: MCI Management Center Innsbruck - Internationale Hochschule GmbH, 6020 Innsbruck (AT)
(72) Erfinder: KRAXNER, Michael, 6500 Landeck (AT); KOFLER, Tobias, 6156 Gries am Brenner (AT)
(74) Vertreter: Schwarz & Partner Patentanwälte OG

(56) Entgegenhaltungen:
- DE-A1- 2 945 951
- DE-A1- 3 615 747
- DE-C- 661 744
- DE-U1-202011 002 037

## Beschreibung

Die Erfindung betrifft eine Abscheidevorrichtung für Teilchen aus einem Fluidstrom, umfassend einen Massenkraftabscheider, wobei der Massenkraftabscheider einen Abscheideraum, einen Fluideintritt, zumindest eine Teilchenaustragsöffnung und zumindest zwei Tauchrohre umfasst.

### STAND DER TECHNIK

Abscheidevorrichtungen für Teilchen (worunter nachfolgend Partikel oder Tropfen verstanden werden) aus einem Fluidstrom finden z.B. Anwendung in Prozessen zur Abscheidung dispers verteilter Feststoffe in Fluidströmen. Es kommen dabei sehr häufig sogenannte Kombinationsfilterelemente zur Anwendung, bei denen verschiedene Abscheider kombiniert werden. Häufig wird als Vorabscheider ein Massenkraftabscheider eingesetzt und mit einem Filterelement bestehend aus porösen Medien kombiniert. Die Vorabscheidung hat die Aufgabe so effektiv wie möglich Teilchen aus dem dispersen Fluidstrom abzutrennen, um die Belastung auf das nachgeschaltete Filterelement zu verringern. Durch die Kombination erfolgt eine nahezu vollständige Abscheidung der Teilchen, wobei der größere Anteil inkl. Grobanteil der Teilchen vom Massenkraftabscheider abgetrennt wird.

Bedingt durch den kontinuierlichen Teilchenaustrag ergibt sich während der Filtrationsdauer kein steigender Druckverlust über dem Massenkraftabscheider. Bei Filterelementen mit porösen Medien hingegen erfolgt eine Anhaftung von Teilchen in und am porösen Medium selbst bzw. an der Oberfläche der Filterelemente mit anwachsenden Filterkuchen, was mit einem ansteigenden Druckverlust bis zum völligen Kollaps des Filterelements über die Filtrationsdauer einhergeht. Die Kombination zwischen diesen Abscheideprinzipien ergibt grundsätzlich eine gesteigerte Filtrationszeit und somit einen für den Prozess effektiveren, nachhaltigeren Abscheideprozess.

Die Effizienz der Vorabscheidung durch einen Massenkraftabscheider ist entscheidend für den Zeitraum bis das Filterelement im Kombinationsfilter mit Filterkuchen belegt ist. Herkömmliche Massenkraftabscheider (Zyklonabscheider) mit einem einzelnen Tauchrohr benötigen nicht nur relativ viel Bauvolumen, sondern aufgrund der begrenzten Trennpartikelgröße auch eine Nachabscheidung. Um diesen Nachteilen Rechnung zu tragen, wurden Massenkraftabscheider entwickelt, bei denen ein Tauchrohr am oberen Ende des Abscheideraums und eines am unteren Ende sitzt. Da am untersten Ende des Abscheideraums auch die Teilchenaustragsöffnung angeordnet ist, muss das zweite Tauchrohr oberhalb dieser Teilchenaustragsöffnung mit einem Knick im Abscheideraum angebracht werden. Dies hat wiederum den Nachteil, dass die Zirkulation des Fluids im Abscheideraum im Bereich des unteren Tauchrohrs gestört wird, was zu inhomogenen Strömungen führt, die den Massenkraftabscheider mechanisch belasten und in weiterer Folge die Abscheidung negativ beeinflussen. Eine Abscheidevorrichtung gemäß dem Oberbegriff des Anspruchs 1 ist aus der DE 29 45 951 A1 bekannt.

### KURZBESCHREIBUNG DER ERFINDUNG

Aufgabe der vorliegenden Erfindung ist es daher, hier Abhilfe zu schaffen und eine Abscheidevorrichtung für Teilchen aus einem Fluidstrom mit Massenkraftabscheider bereit zu stellen, welche diese Nachteile nicht aufweist. Außerdem soll die Abscheidevorrichtung eine kompakte Bauform aufweisen. Insbesondere soll auch die Zeit bis zur Belegung eines nachgeordneten Filterelements ggf. auch mit einem Filterkuchen möglichst lang sein.

Gelöst wird diese Aufgabe durch eine Abscheidevorrichtung für Teilchen aus einem Fluidstrom, umfassend einen Massenkraftabscheider, wobei der Massenkraftabscheider
- einen Abscheideraum,
- einen Fluideintritt,
- zumindest einen Teilchenaustritt und
- zumindest zwei Tauchrohre umfasst,
welche dadurch gekennzeichnet ist, dass
der Abscheideraum im Wesentlichen die Form eines Rotationskörpers aufweist, wobei der Rotationskörper einen Mantel und zwei Deckflächen besitzt zwischen denen der Abscheideraum angeordnet ist, wobei der Fluideintritt tangential zur Oberfläche des Mantels in den Abscheideraum mündet und wobei jeweils ein Tauchrohr in jeweils einer der Deckflächen angeordnet ist, wobei sich die Teilchenaustragsöffnung radial zur Mantelfläche des Rotationskörpers erstreckt.

Bei der vorliegenden Erfindung weist der Massenkraftabscheider einen Abscheideraum, einen tangentialen Fluideintritt und zwei - vorzugsweise spiegelsymmetrisch angeordnete - Tauchrohre als Fluidaustritt aus dem Massenkraftabscheider auf. Die abgeschiedenen Teilchen werden über den Teilchenaustritt in zumindest einem Sammelbehälter aufgefangen. Vorteile gegenüber dem Stand der Technik sind eine kompakte Bauweise, ein gleichmäßigeres Strömungsbild und in weiterer Folge ein geringer Durchströmungswiderstand.

Der Rotationskörper umfasst den Abscheideraum. Bevorzugt ist der Rotationskörper ein gerader Kreiszylinder. Alternativ dazu kann er aber auch als spiegelsymmetrischer Kegelstumpf ausgebildet sein.

Außerdem ist mit der beschriebenen Bauart eine horizontale Ausrichtung des Abscheideraums möglich, d.h. der Rotationskörper, vorzugsweise Zylinder, kann eine zur Horizontalen parallele Rotationsachse aufweisen, wodurch auch die Tauchrohre horizontal angeordnet sind. Bei üblichen Massenkraftabscheidern ist der Abscheideraum senkrecht ausgerichtet. Durch die horizontale Ausrichtung ergeben sich an beiden Tauchrohren dieselben Fluidgeschwindigkeiten. Auch können die Teilchenaustragsöffnungen an der Unterseite des Abscheideraums angebracht werden.

Die Tauchrohre ragen in den Abscheideraum und weisen im Inneren des Abscheideraums jeweils eine Öffnung auf, sodass das vorgereinigte Fluid in das Tauchrohr eindringen kann. Außerdem weisen die Tauchrohre - zumindest im Bereich der Deckfläche des Zylinders - nach Außen hin ebenfalls auch jeweils eine Öffnung auf, sodass das gereinigte Fluid die Abscheidevorrichtung auch wieder verlassen kann.

Die Tauchrohre können einfache kreisförmige, gerade Zylinder bilden. Es hat sich jedoch bzgl. der Strömungsführung als vorteilhaft erwiesen, wenn die Tauchrohre nach Außen hin konisch ausgebildet sind.

In einer bevorzugten Ausführungsvariante sind die Tauchrohre entlang der Rotationsachse des Rotationskörpers (vorzugsweise Kreiszylinders) angeordnet. Dies erleichtert die Verbindung der Tauchrohre mit einem Filterelement.

Eine alternative Ausführungsvariante sieht vor, dass die Tauchrohre exzentrisch zur Rotationsachse des Rotationskörpers (vorzugsweise Kreiszylinders) angeordnet sind. Dies kann im Besonderen im Einlaufbereich und am Austrag optimierte Strömungsverhältnisse hervorrufen, welche in einer optimierten Abscheidung resultieren.

In einer bevorzugten Ausführungsvariante ist nämlich vorgesehen, dass die Tauchrohre durch ein Filterelement im Abscheideraum verbindbar oder verbunden sind. Eine solche Ausgestaltung hat mehrere Vorteile. Üblicherweise ist dem Massenkraftabscheider noch ein Filterelement nachgeschaltet. Bei zwei Tauchrohren muss dazu eine Verrohrung oder eine Ummantelung des Massenkraftabscheiders vorgesehen werden, um das im Massenkraftabscheider vorgereinigte Fluid zum Filterelement zu leiten.

Wenn nun das Filterelement zwischen den Tauchrohren so aufgespannt ist, dass das Fluid durch das Filterelement durchströmen muss, um über die Tauchrohre in den Reinfluidstrom zu gelangen, kann auf eine solche Verrohrung oder Ummantelung verzichtet werden. Außerdem ergibt sich dadurch eine noch kompaktere Bauform, da das Filterelement in den Rotationskörper bzw. Abscheideraum integriert ist.

Das Filterelement ist bevorzugt ein Faltenfilter, da solche eine große Filteroberfläche aufweisen. Das Filter kann jedoch auch jede beliebige andere Bauweise aufweisen, ebenso sind als Medien diverse Materialien - in Abhängigkeit des gewünschten Einsatzgebiets - geeignet.

Im einfachsten Fall ist das Filterelement ein Patronenfilter, welcher auf beiden Stirnseiten offen ist. Ein solches kann einfach auf die Tauchrohre aufgesteckt und zwischen diesen eingespannt werden.

Damit das Filterelement einfach aufgesteckt werden kann ist es vorteilhaft, wenn die Tauchrohre einen kreisförmigen Querschnitt aufweisen.

In einer Ausführungsvariante der Erfindung kann vorgesehen sein, dass sich die Teilchenaustragsöffnung entlang des gesamten Mantels, vorzugsweise tangential aber gegebenenfalls auch radial zur Mantelfläche des Rotationskörpers, erstreckt.

Eine alternative Ausführungsvariante sieht mehrere Teilchenaustragsöffnungen, vorzugsweise symmetrisch entlang der Mantelfläche des Rotationskörpers angeordnet, vor.

Die wenigstens eine Teilchenaustragsöffnung ist an der Unterseite des Rotationskörpers bzw. des Abscheideraums angeordnet.

Mit der erfindungsgemäßen Abscheidevorrichtung ist die Abtrennung von verschiedenen Teilchen möglich. Wenn die Teilchen fest sind, kann der Fluidstrom flüssig oder gasförmig sein. Beispielhaft sei der Einsatz der Abscheidevorrichtung in Trennvorrichtungen wie Sägen genannt, bei denen Staub oder Späne auftreten. Hierbei ist der Fluidstrom die Staub- und Spanhaltige Abluft, die filtriert werden muss.

Sind die Teilchen flüssig, so kann der Fluidstrom gasförmig sein. Beispielsweise sei die Abtrennung einer unerwünschten Flüssigkeit aus einem Gas als Fluidstrom genannt.

Es ist weiters vorgesehen, dass die zumindest eine Teilchenaustragsöffnung in einen mit dem Abscheideraum fluiddicht verbundenen Sammelbehälter mündet.

In einer Ausführungsvariante kann vorgesehen sein, dass die Tauchrohre in einen Behälter münden, welcher vorzugsweise den Massenkraftabscheider vollständig umgibt. Hierdurch kann das gereinigte Fluid in dem Behälter gesammelt und einer weiteren Behandlung unterzogen werden.

In einem Aspekt der Erfindung ist eine Vorrichtung zur Entfernung des Filterkuchens auf dem Filterelement vorgesehen.

Eine solche Vorrichtung erhöht die Standzeit des Filterelements signifikant. Es sind verschiedene Möglichkeiten denkbar, wie diese Vorrichtung zur Entfernung des Filterkuchens ausgestaltet sein kann. Beispielsweise kann diese einen nach den Tauchrohren angeordneten Druckluftkompressor oder Druckluftspeicher aufweisen. Damit ist es möglich, die Tauchrohre mit dem aufgespannten Filterelement mit Druckluft zu beaufschlagen, was in weiterer Folge dazu führt, dass der Filterkuchen abfällt, wird das Filterelement entgegen der Filtrationsrichtung gegengespült.

Die Vorrichtung zur Entfernung des Filterkuchens kann aber auch einen oder mehrere im Wesentlichen feststehende oder bewegliche Vorsprünge aufweisen, die im Abscheideraum bzw. in oder außerhalb der Tauchrohre angeordnet sind. Wenn nun die Tauchrohre entlang der Rotationsachse drehbar gelagert sind, kann man die Tauchrohre gemeinsam mit dem Filterelement um die Rotationsachse drehen und so das Filterelement an den festen Vorsprüngen vorbeiführen, wodurch der Filterkuchen abgekratzt oder abgeklopft wird. Der feststehende Vorsprung kann auch eine Bürste umfassen.

### DETAILLIERTE BESCHREIBUNG DER ERFINDUNG

Anhand der Figuren und Figurenbeschreibung werden weitere Details und Vorteile der Erfindung erläutert.
- Fig. 1a, 1b: zeigt schematisch perspektivische Darstellungen einer Abscheidevorrichtung für Teilchen aus einem Fluidstrom gemäß einer Ausführungsvariante der Erfindung.
- Fig. 2a - 2c: zeigt schematisch perspektivische Darstellungen von Abscheidevorrichtungen gemäß dreier Ausführungsvarianten der Erfindung mit unterschiedlichen Teilchenaustragsöffnungen.
- Fig. 3: zeigt eine Abscheidevorrichtung mit Filterelement im Abscheideraum.
- Fig. 4a - 4c: zeigen Ausführungsvarianten von Abscheidevorrichtungen gemäß der Erfindung mit unterschiedlichen Formen für die Fluideintrittsöffnung.
- Fig. 5a, 5b: zeigt zwei Ausführungsvarianten von Abscheidevorrichtungen mit unten angeordnetem Rohfluideintritt.
- Fig. 6a - 6c: zeigen Ansichten der Ausführungsvariante der Fig. 1.
- Fig. 7a - 7c: zeigen die Ansichten gemäß Fig. 6a - 6c einer alternativen Ausführungsvariante und auch mit nicht zylindrischen Tauchrohren.
- Fig. 8a - 8d: zeigen Ansichten einer Vorrichtung zur Entfernung des Filterkuchens vom Filterelement.

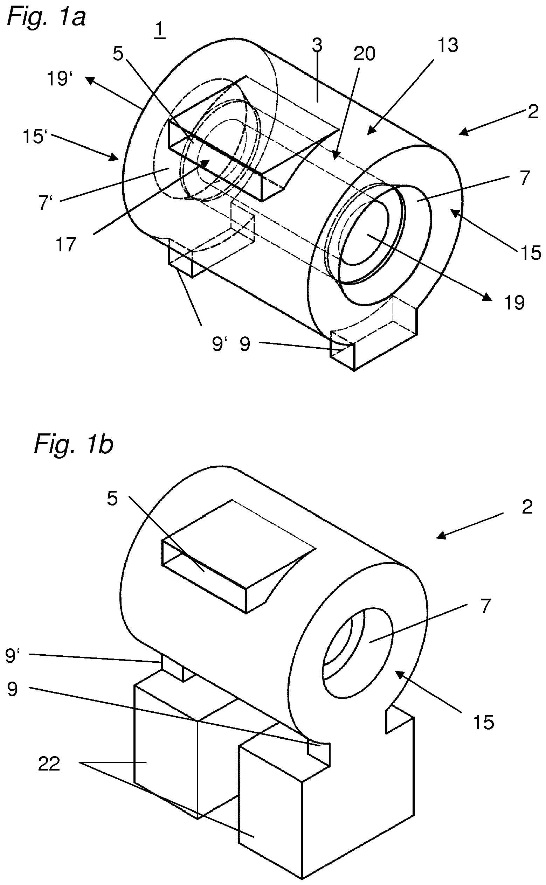

Fig. 1a zeigt eine Abscheidevorrichtung 1 gemäß einer Ausführungsvariante der Erfindung. Die Abscheidevorrichtung 1 weist einen Massenkraftabscheider 2 auf, mit einem Abscheideraum 3, einen Fluideintritt 5 und zwei Teilchenaustragsöffnungen 9, 9'. Weiters sind zwei Tauchrohre 7, 7' vorgesehen. Der Abscheideraum 3 weist die Form eines Rotationskörpers und zwar eines geraden Kreiszylinders auf, wobei dieser einen Mantel 13 und zwei Deckflächen 15, 15' aufweist. Der Fluideintritt 5 mündet tangential zur Oberfläche des Mantels 13 in den Abscheideraum 3. Die tangentiale Mündung ist durch einen Pfeil 17 dargestellt. Ein Tauchrohr 7 ist in der einen Deckfläche 15 angeordnet, während das andere Tauchrohr 7' in der anderen Deckfläche 15' angeordnet ist.

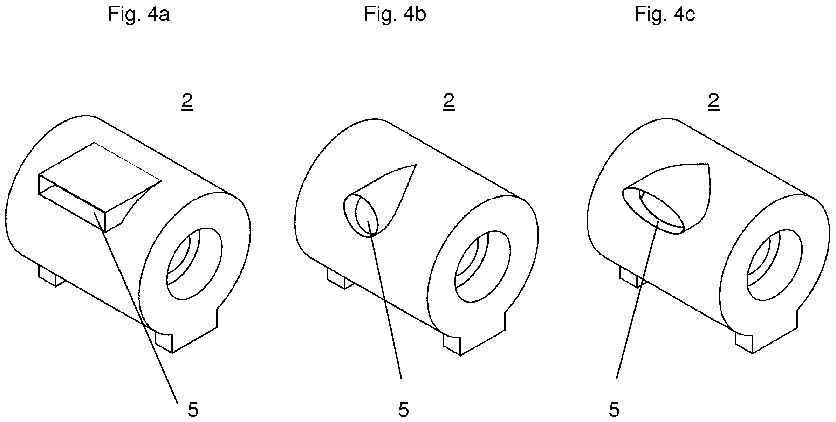

Das z.B. mit Feststoffen beladene disperse Rohfluid strömt durch den Fluideintritt 5 in den Abscheideraum 3 des Massenkraftabscheiders 1. Der Fluideintritt 5 ist im vorliegenden Fall rechteckig ausgeformt, kann aber natürlich auch anderen Formen, wie z.B. oval, quadratisch, polygonförmig etc. ausgebildet sein (siehe auch Fig. 4a bis 4c). Durch den tangentialen Eintritt des dispersen Stoffstroms des Rohfluids (hier: Feststoffe als Teilchen und Fluid) in den Abscheideraum 3 wird dieser durch die zylindrische Form in eine rotierende Strömungsbahn gezwungen. Infolge der Kreisbewegung erfahren die Teilchen und das Fluid eine Zentrifugalbeschleunigung. Durch die Dichtedifferenz zwischen Feststoffen und Fluid bzw. unterschiedlichen Massenträgheiten ergibt sich eine Anhäufung der Feststoffe an der inneren Mantelfläche (Abscheidewand) des Zylinders des Abscheideraumes 3.

Die Feststoffe an der Abscheidewand werden durch Teilchenaustragsöffnungen 9, 9' in Sammelbehälter 22 abgeschieden (Fig. 1b). Je nach Art und Verhalten des abzuscheidenden Feststoffs wird die geometrische Form der Teilchenaustragsöffnungen 9, 9' angepasst. Die hier dargestellte Möglichkeit zeigt einen geteilten Austrag mit zwei an den Stirnseiten des Abscheideraums 3 radial angeordneten Teilchenaustragsöffnungen 9, 9'. Neben der hier dargestellten Ausführungsvariante mit zwei Teilchenaustragsöffnungen 9, 9' sind auch Ausführungsvarianten mit nur einer Teilchenaustragsöffnung 9 (z.B. ein über die gesamte Länge des Abscheideraums 3 hinwegreichender schlitzförmiger Teilchenaustragsöffnung 9) oder mehreren Teilchenaustragsöffnungen 9, 9' zur Abtrennung der Feststoffe denkbar. In jedem Fall erfolgt die Sammlung der abgetrennten Feststoffe in nach außen hin druckdicht bzw. fluiddicht abgetrennten Sammelbehältern 22. Das gereinigte Fluid tritt über die Tauchrohre 7, 7' aus dem Massenkraftabscheider 1 nach außen, angedeutet durch die Pfeile 19, 19'. Neben der hier dargestellten Variante mit zwei Sammelbehältern 22 können natürlich auch nur ein oder mehr als zwei Sammelbehälter 22 vorgesehen sein.

Die Teilchenaustragsöffnungen 9, 9' können an der Unterseite als Durchtrittsöffnung ausgeführt sein, was für einen geringen Strömungsabriss sorgt (siehe Fig. la).

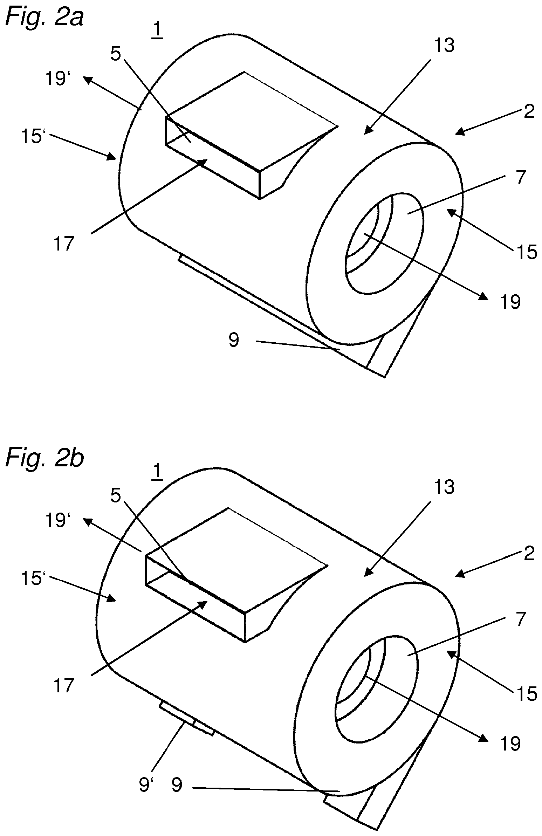

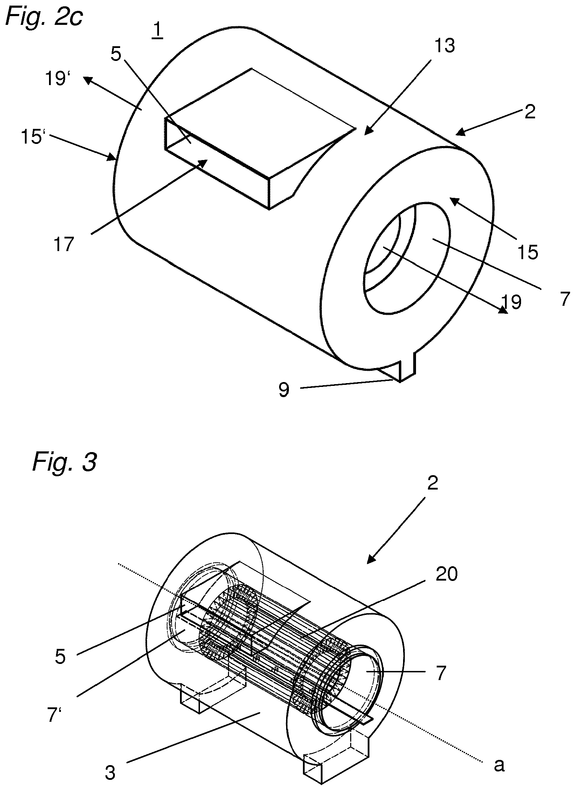

Die Fig. 2a bis 2c zeigen jeweils eine Abscheidevorrichtung 1 mit Massenkraftabscheider 2, die baulich mit der Abscheidevorrichtung 1 der Fig. 1a übereinstimmt, sodass an dieser Stelle auf eine genaue Beschreibung der einzelnen Bauteile verzichtet wird und auf die Beschreibung zu Fig. 1a verwiesen werden darf. Der wesentliche Unterschied zwischen den Abscheidevorrichtungen 1 der Fig. 1a und Fig. 2a, 2b oder 2c ist die Zahl und Form der Teilchenaustragsöffnungen 9, 9'. Während Fig. 1a zwei Teilchenaustragsöffnungen 9, 9' an den Stirnseiten des Abscheideraums 3 mit Durchtrittsöffnungen zeigt, offenbart die Fig. 2a eine einzelne tangentiale Teilchenaustragsöffnung 9 über die gesamte Länge des Abscheideraums 3 in Form eines Schlitzes. Die Fig. 2b offenbart zwei getrennte tangentiale Teilchenaustragsöffnungen 9, 9'. Fig. 2c zeigt eine Teilchenaustragsöffnung 9 in Form einer Durchtrittsöffnung.

Um die Reinigungsleistung des Massenkraftabscheiders 1 zu verbessern, kann in einem Aspekt der Erfindung weiters ein Filterelement 20 vorgesehen sein. Das Filterelement 20 ist im vorliegenden Fall zwischen den beiden Tauchrohren 7, 7' aufgespannt. Das Filterelement 20 besteht aus einem porösen Filtermaterial, mit dem der restliche Feststoffanteil vom Fluidstrom getrennt wird. Die Anordnung dieses Filterelements 20 zwischen den Tauchrohren 7, 7' innerhalb des Abscheideraums 3 ist in Fig. 3 verdeutlicht. Es ist eine druckdichte Verbindung zwischen Filterelement 20 und Tauchrohren 7, 7' vorgesehen. Durch die geometrische Form der Tauchrohre 7, 7' ergibt sich die zylindrische Ausformung des Filterelements 20 als Patronenfilter. Wie hier gezeigt ist es vorteilhaft, wenn das Filterelement 20 zentral entlang der Zylinderachse des Abscheideraums 3 verläuft und wenn das Filterelement 20 selbst im Wesentlichen zylinderförmig ausgebildet ist.

Die Fig. 1b zeigt ebenfalls Sammelbehälter 22 zum Auffangen der Teilchen. Es kann natürlich auch nur ein einzelner Sammelbehälter 22 vorgesehen sein.

Der Fluidstrom mit geringerer Dichte und damit geringerer Trägheit strömt nach innen und damit weiter durch das poröse Filtermedium des Filterelements 20. Der dadurch vollständig gereinigte Reinfluidstrom verlässt anschließend die Abscheidevorrichtung 1 durch die Tauchrohre 7, 7' an beiden Seiten des Massenkraftabscheiders 2 bzw. an den Deckflächen des Abscheideraums 3. Durch die Anordnung des Filterelements 20 im Abscheideraum 3 ergibt sich eine günstigere Strömungsführung innerhalb des Abscheideraums 3 infolge der erhöhten lokalen Umfangsgeschwindigkeiten um das Filterelement 20. Die Umfangsgeschwindigkeit korreliert mit der Abscheideeffizienz des Massenkraftabscheiders 2. Die einzelnen Hauptabmessungen der Komponenten tragen in unterschiedlichen Weisen zur Gesamteffizienz der Abscheidevorrichtung 1 bei. Aus einer Vergrößerung der Tauchrohrdurchmesser 7, 7' folgt eine Verringerung des Druckverlusts. Dies erfolgt einerseits durch die verringerte Strömungsgeschwindigkeit im Tauchrohr 7, 7' selbst und andererseits durch die daraus resultierende Vergrößerung der Filterfläche des Filterelements 20. Gleichzeitig resultiert aus einer Vergrößerung der Tauchrohrdurchmesser 7, 7' eine weniger effiziente Vorabscheidung des Massenkraftabscheiders 2 und somit eine erhöhte Filterbelastung des Filterelements 20, welche wiederum den Druckverlust des Filterelements 20 schneller ansteigen lässt.

Der Abscheidegrad des Massenkraftabscheiders 2 korreliert mit der Eintrittsgeschwindigkeit, aus der sich die Zentrifugalbeschleunigung des Feststoffs ableitet. Um das Strömungsprofil am Eintritt in den Abscheideraum 3 zu beeinflussen ergibt sich die Möglichkeit der geometrischen Veränderung des Fluideintritts 5 (Fig. 4a bis 4c). Neben der einfachen Veränderung der geometrischen Abmessungen des Fluideintritts 5 besteht auch die Möglichkeit der Beeinflussung des Strömungsprofils durch dessen Form. Hier ergeben sich Möglichkeiten zur Ausformung des Fluideintritts 5 als Rechteck wie auch runde oder (nicht gezeigte) polygonartige Ausformungen. Grundsätzlich erweist es sich als sinnvoller den Fluideintritt 5 aus strömungstechnischer Sicht in einem geringen Höhe/Breite - Verhältnis zu konstruieren. Daraus ergibt sich ein homogeneres Strömungsprofil im Abscheideraum 3 und damit ein besseres Abscheideergebnis.

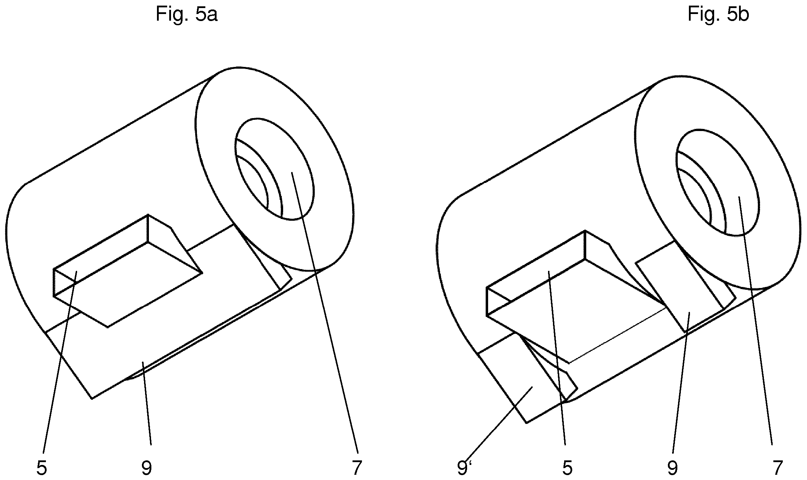

Fig. 5a zeigt eine Ausführungsvariante der Erfindung gemäß Fig. 1 mit dem Unterschied, dass der Fluideintritt 5 an der Unterseite des Abscheideraums 3 in den Massenkraftabscheider 2 mündet, während in Fig. 1 der Fluideintritt 5 an der Oberseite des Abscheideraums 3 in den Massenkraftabscheider 2 mündet. Die Mündung des Fluideintritts 5 ist zur Teilchenaustragsöffnung 9 gegenläufig.

Fig. 5b zeigt eine Ausführungsvariante der Erfindung gemäß Fig. 2 mit dem Unterschied, dass der Fluideintritt 5 an der Unterseite des Abscheideraums 3 in den Massenkraftabscheider 2 mündet, während in Fig. 2 der Fluideintritt 5 an der Oberseite des Abscheideraums 3 in den Massenkraftabscheider 2 mündet. Die Mündung des Fluideintritts 5 ist zu den Teilchenaustragsöffnungen 9, 9' gegenläufig.

Speziell für Anforderungen, bei denen sehr große Teilchen abgetrennt werden sollen, kann der Fluideintritt 5 in den Massenkraftabscheider 2 tangential an der Unterseite erfolgen. Dabei erfolgt eine Vorsedimentation der großen Feststoffanteile bereits im Bereich des Fluideintritts 5 infolge der hohen Sedimentationsgeschwindigkeit der großen Teilchen. Die sedimentierten Feststoffanteile werden durch den an der Unterseite angeordneten Fluideintritt 5 sofort in den Sammelbehälter 22 abgeschieden. Durch die sofortige Abtrennung ergibt sich eine verringerte Wahrscheinlichkeit, dass große Feststoffanteile an das Filterelement dynamisch stoßen können. Infolge der hohen Geschwindigkeit der Feststoffe im Wirbel des Abscheideraums 3 ergibt sich eine große punktuelle Impulseinwirkung auf das poröse Filtermedium des Filterelements 20, wodurch eine mechanische Zerstörung hervorgerufen werden kann. Um dies zu verhindern, kann neben der Anordnung des Fluideintritts 5 auch ein Schutzkäfig um das Filterelement 20 angebracht werden.

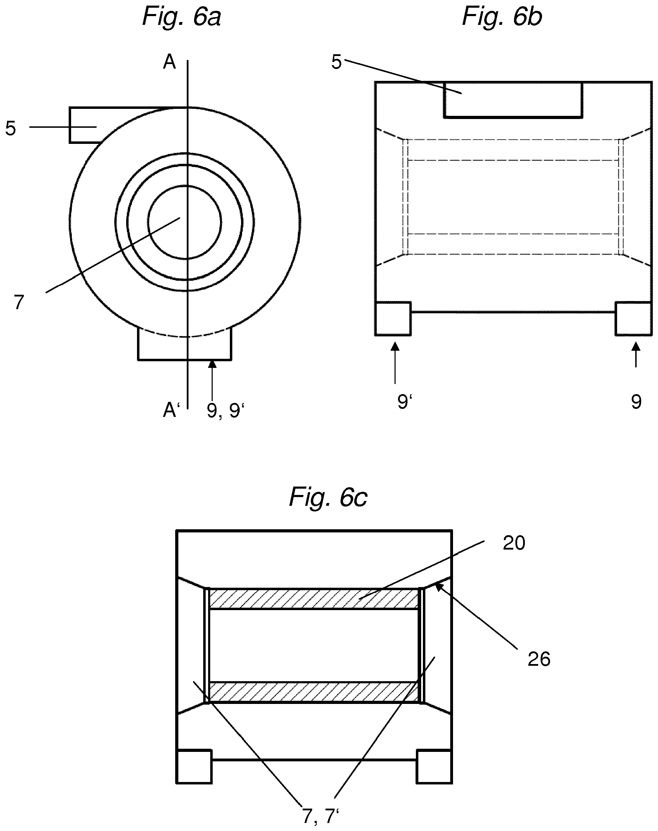

In den Fig. 6a bis 6b sind Ansichten der Ausführungsvariante gemäß Fig. 1 dargestellt. Fig. 6a zeigt eine Seitenansicht, aus welcher die Form des Abscheideraums 3 als kreisförmiger, gerader Zylinder noch besser hervorgeht. Fig. 6b zeigt eine Frontalansicht vom Beispiel der Fig. 1. Fig. 6c zeigt noch einen Schnitt entlang der Linie A-A' der Fig. 6a. Die Tauchrohre 7, 7' sind in diesem Fall erkennbar konisch dargestellt. Das Filterelement 20 ist in diesem Fall bündig mit den Tauchrohren 7, 7'. Eine Möglichkeit zur Optimierung des Druckverlusts in den Tauchrohren 7, 7' ist in den Fig. 6a bis 6b erkennbar. Hierbei wird durch Vergrößerung des Strömungsquerschnitts die Geschwindigkeit des Reinfluids am Tauchrohraustritt gesenkt und damit der gesamte Druckverlust verringert. Die Erweiterung kann durch verschiedene geometrische Formen erfolgen und strömungstechnisch optimiert ausgeführt werden.

Die Abdichtung des Filterelements 20 zwischen den Tauchrohren 7, 7' kann ebenso an der Innenseite des Filterelements 20 erfolgen. Durch diese Anordnung ergibt sich eine gesteigerte Umfangsgeschwindigkeit im Eintrittsbereich des Abscheideraums 3 durch die veränderte Querschnittsfläche und folglich eine bessere Abscheidung der Feststoffe. Die abrupte Durchmesserveränderung am Tauchrohreintritt bewirkt eine Senkung der Umfangsgeschwindigkeit. In diesem Bereich ist eine Sedimentation der Feststoffe jedoch ohne Relevanz, da eine räumliche Nähe zum Austrag gegeben ist und der Feststoff faktisch abgeschieden ist. Wichtig dabei ist die geschlossene Ausführung der Stirnflächen des Filterelements 20 zum Abscheideraum 3 hin.

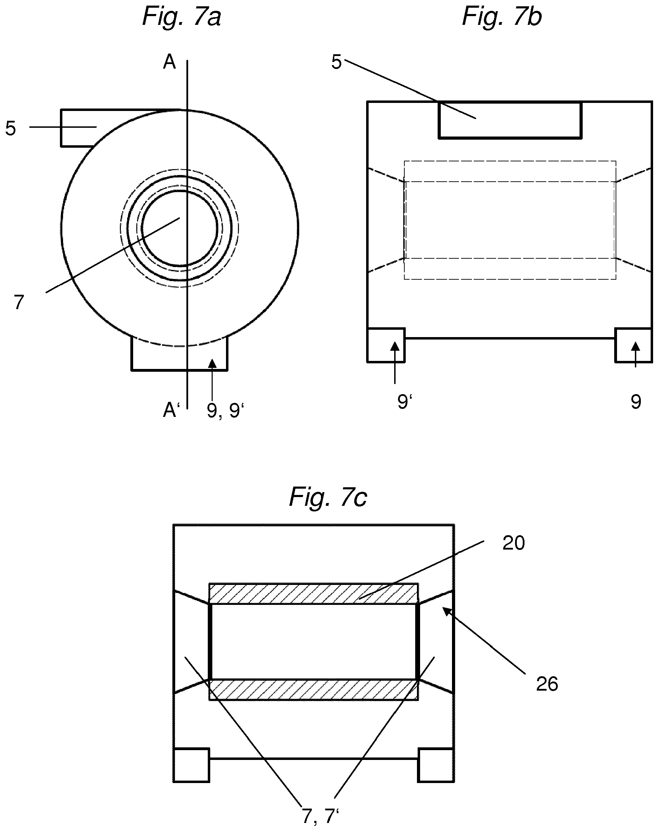

Die Fig. 7a bis 7c entsprechen den Darstellungen der Fig. 6a bis 6c mit dem Unterschied, dass die Form der Tauchrohre 7, 7' einen kleineren Konus aufweist. Auch steht das Filterelement 20 über die konusförmigen Abschnitte der Tauchrohre 7, 7' hinaus. Dies erlaubt- im Unterschied zum Beispiel aus Fig. 6a bis 6c - den Ausgleich geringer Schwankungen in der Länge des Filterelements 20. Es handelt sich hierbei um eine innendichtende Filteranordnung.

In einem Aspekt der Erfindung ist eine Vorrichtung zur Abreinigung des Filterelements 20 vorgesehen. Die Abreinigung soll den aufgebauten Filterkuchen an der Oberfläche des porösen Filtermediums des Filterelements 20 abreinigen und somit den Druckverlust durch das Filterelement 20 verringern und eine Filterregeneration bewirken. Dies kann im laufenden Filterbetrieb des Abscheiders als Onlineregeneration erfolgen sowie als Offlineregeneration ohne Filtration eines beladenen Rohfluidstroms. Der abgetrennte Filterkuchen, ist zwar ein Agglomerat aus Partikeln kleiner als der Trennkorndurchmesser des Massenkraftabscheiders 2, hat jedoch im Agglomerat eine große Masse sowie Angriffsfläche und kann durch den Staubaustrag abgetrennt werden. Eine Möglichkeit ist die entgegengesetzte Durchströmung des porösen Filtermediums mittels unter Druck stehendem Fluid. Dies kann durch einen Druckstoß von der Reinfluidseite erfolgen, der den aufgebauten Filterkuchen abplatzen lässt und eine weitere Filtration des Rohfluidstroms ermöglicht.

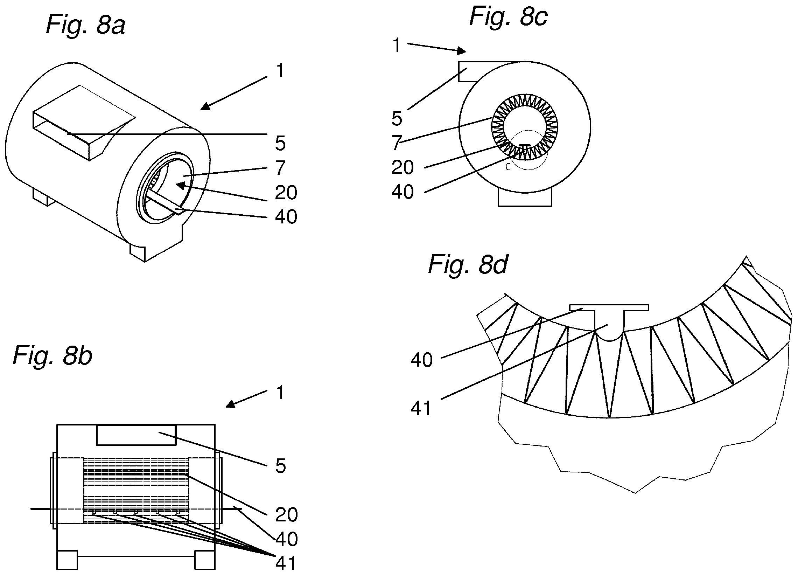

Eine weitere Möglichkeit der Filterregeneration bietet eine mechanische Beanspruchung der Filteroberfläche des Filterelements 20 bzw. des Filterkuchens selbst, die z.B. in den Fig. 8a bis 8d dargestellt ist. Dabei zeigt Fig. 8a eine perspektivische Darstellung, Fig. 8b eine Ansicht von der Vorderseite mit dem Filterelement 20 zur Veranschaulichung, Fig. 8c eine Seitenansicht und Fig. 8d eine Vergrößerung des mit "C" bezeichneten Abschnitts der Fig. 8c.

Hier wird das poröse Filtermedium des Filterelements 20 durch berührende Reinigungsnoppen bzw. -bürsten mechanisch belastet und der aufgebaute Filterkuchen gelöst. Die Anordnung dieser Reinigungsbürsten kann innerhalb des Filtermediums 20, also auf der Reinfluidseite erfolgen. Hierbei bringt eine drehbare Ausführung der Tauchrohre 7, 7' inkl. Filterelement 20 eine gesteigerte Reinigungseffizienz. Durch die drehbare Ausführung der Tauchrohre 7, 7' verbunden mit der Drehung des Filtermediums 20 wird der aufgebaute Filterkuchen abgetrennt. Die dazu nötige Relativbewegung zwischen dem Filtermedium 20 und Reinigungsbürste wird durch eine feststehende Bürste/Noppen 41 im inneren des Filtermediums 20 gewährleistet, die auf einem Noppenträger 40 aufgebracht sind. Im vorliegenden Beispiel sind insgesamt 5 Noppen 41 vorgesehen. Es kann natürlich auch eine Abreinigung erreicht werden, wenn die Tauchrohre 7, 7' und ev. das Filtermedium 20 statisch bleiben und sich relativ dazu die Abreinigungsnoppen 41 bewegen. Dies kann z.B. durch Bewegen des Noppenträgers 40 erfolgen.

## Patentansprüche

1. Abscheidevorrichtung (1) für Teilchen aus einem Fluidstrom, umfassend einen Massenkraftabscheider (2), wobei der Massenkraftabscheider (2)
• einen Abscheideraum (3),
• einen Fluideintritt (5),
• zumindest zwei Tauchrohre (7, 7') und
• zumindest eine Teilchenaustragsöffnung (9, 9') umfasst,
wobei der Abscheideraum (3) im Wesentlichen die Form eines Rotationskörpers aufweist, wobei der Rotationskörper einen Mantel (13) und zwei Deckflächen (15, 15') besitzt, wobei der Fluideintritt (5) tangential zur Oberfläche des Mantels (15) in den Abscheideraum (3) mündet und wobei ein Tauchrohr (7) in der einen Deckfläche (15) und das andere Tauchrohr (7') in der anderen Deckfläche (15') angeordnet ist, **dadurch gekennzeichnet, dass** sich die Teilchenaustragsöffnung (9, 9') radial zur Mantelfläche des Rotationskörpers erstreckt.

2. Abscheidevorrichtung nach Anspruch 1, **dadurch gekennzeichnet, dass** der Rotationskörper ein gerader Kreiszylinder ist.

3. Abscheidevorrichtung nach Anspruch 1 oder Anspruch 2, **dadurch gekennzeichnet, dass** die Tauchrohre (7, 7') entweder entlang der Rotationsachse (a) des Rotationskörpers, vorzugsweise Kreiszylinders, angeordnet sind oder exzentrisch zur Rotationsachse (a) des Rotationskörpers, vorzugsweise Kreiszylinders, angeordnet sind.

4. Abscheidevorrichtung nach einem der Ansprüche 1 bis 3, **dadurch gekennzeichnet, dass** die Tauchrohre (7, 7') durch ein Filterelement (20) im Abscheideraum (3) verbindbar oder verbunden sind.

5. Abscheidevorrichtung nach Anspruch 4, **dadurch gekennzeichnet, dass** das Filterelement (20) an der Innenseite oder an der Außenseite des Tauchrohrmantels aufgesetzt ist.

6. Abscheidevorrichtung nach Anspruch 4 oder Anspruch 5, **dadurch gekennzeichnet, dass** das Filterelement (20) ein Patronenfilter ist.

7. Abscheidevorrichtung nach einem der Ansprüche 1 bis 6, **dadurch gekennzeichnet, dass** die Tauchrohre (7, 7') konisch oder trompetenförmig ausbildet sind.

8. Abscheidevorrichtung nach einem der Ansprüche 1 bis 7, **dadurch gekennzeichnet, dass** die Tauchrohre (7, 7') einen kreisförmigen Querschnitt aufweisen.

9. Abscheidevorrichtung nach einem der Ansprüche 1 bis 8, **dadurch gekennzeichnet, dass** sich die Teilchenaustragsöffnung (9, 9') entlang des gesamten Mantels (13) erstreckt.

10. Abscheidevorrichtung nach einem der Ansprüche 1 bis 9, **dadurch gekennzeichnet, dass** mehrere Teilchenaustragsöffnungen (9, 9'), vorzugsweise symmetrisch entlang des Mantels (13) angeordnet, vorgesehen sind.

11. Abscheidevorrichtung nach einem der Ansprüche 1 bis 10, **dadurch gekennzeichnet, dass** die Tauchrohre (7, 7') in einen Behälter münden, welcher vorzugsweise den Massenkraftabscheider (2) teilweise oder vollständig umgibt.

12. Abscheidevorrichtung nach einem der Ansprüche 1 bis 11, **dadurch gekennzeichnet, dass** die zumindest eine Teilchenaustragsöffnung (9, 9') in einen mit dem Abscheideraum (3) fluiddicht verbundenen Sammelbehälter (22) mündet.

13. Abscheidevorrichtung nach einem der Ansprüche 3 bis 12, **dadurch gekennzeichnet, dass** eine Vorrichtung zur Entfernung des Filterkuchens von dem Filterelement (20) vorgesehen ist.

14. Abscheidevorrichtung nach Anspruch 13, **dadurch gekennzeichnet, dass** die Vorrichtung zur Entfernung des Filterkuchens einen nach den Tauchrohren (7, 7') angeordneten Druckluftkompressor oder Druckluftspeicher aufweist.

15. Abscheidevorrichtung nach Anspruch 13, **dadurch gekennzeichnet, dass** die Vorrichtung zur Entfernung des Filterkuchens einen feststehenden oder drehbaren Vorsprung (41) aufweist, der im oder außerhalb des Abscheideraums (3) angeordnet ist, wobei die Tauchrohre (7, 7') entlang der Rotationsachse (a) drehbar gelagert oder fest angebracht sind, wobei der Vorsprung (41) gegebenenfalls eine Bürste umfasst.

## Claims

1. A separation device (1) for particles from a fluid flow, comprising a centrifugal separator (2), wherein the centrifugal separator (2) comprises
• a separation chamber (3),
• a fluid inlet (5),
• at least two dip tubes (7, 7'), and
• at least one particle discharge opening (9, 9'),
**characterized in that**
the separation chamber (3) is substantially formed as a rotational body, wherein the rotational body has a casing (13) and two end faces (15, 15'), wherein the fluid inlet (5) leads into said separation chamber (3) tangentially to the surface of the casing (15) and wherein one dip tube (7) is situated in one of the end faces (15) and the other dip tube (7') being situated in the other end face (15'), **characterized in that** the particle discharge opening (9, 9') extends radially to the generated surface of the rotational body

2. A separation device according to claim 1, **characterized in that** the rotational body is a right circular cylinder.

3. A separation device according to claim 1 or claim 2, **characterized in that** the dip tubes (7, 7') are arranged either along the axis of rotation (a) of the rotational body, preferably of the circular cylinder, or are arranged eccentrically to the axis of rotation (a) of the rotational body, preferably of the circular cylinder.

4. A separation device according to any of claims 1 to 3, **characterized in that** the dip tubes (7, 7') are connectable or connected via a filter element (20) in the separation chamber (3).

5. A separation device according to claim 4, **characterized in that** the filter element (20) is placed on the inside or on the outside of the dip tube casing.

6. A separation device according to claim 4 or claim 5, **characterized in that** the filter element (20) is a cartridge filter.

7. A separation device according to any of claims 1 to 6, **characterized in that** the dip tubes (7, 7') are configured in a conical or trumpet shape.

8. A separation device according to any of claims 1 to 7, **characterized in that** the dip tubes (7, 7') have a circular cross-section.

9. A separation device according to any of claims 1 to 8, **characterized in that** that the particle discharge opening (9, 9') are arranged along the entire casing (13).

10. A separation device according to any of claims 1 to 9, **characterized in that** there are several particle discharge openings (9, 9') being arranged along the entire casing (13).

11. A separation device according to any of claims 1 to 10, **characterized in that** the dip tubes (7, 7') open into a container, which preferably surrounds the centrifugal separator (2) partially or completely.

12. A separation device according to any of claims 1 to 11, **characterized in that** the at least one particle discharge opening (9, 9') opens into a collection container (22) connected to the separation chamber (3) in a fluid-tight manner.

13. A separation device according to any of claims 3 to 12, **characterized in that** a device for removing the filter cake from the filter element (20) is provided.

14. A separation device according to claim 13, **characterized in that** the device for removing the filter cake comprises an air compressor or a compressed air reservoir arranged after the dip tubes (7, 7').

15. A separation device according to claim 13, **characterized in that** the device for removing the filter cake comprises a stationary or rotatable projection (41), which is arranged in the separation chamber (3) or outside thereof, wherein the dip tubes (7, 7') are pivoted or firmly attached along the axis of rotation (a), with the projection (41) optionally comprising a brush.

## Revendications

1. Dispositif de séparation (1) de particules d'un flux de fluide, comprenant un séparateur centrifuge (2), dans lequel le séparateur centrifuge (2) comprend:
• une chambre de séparation (3),
• une entrée de fluide (5),
• au moins deux tubes plongeurs (7, 7'), et
• au moins une ouverture d'extraction de particules (9, 9'),
dans lequel la chambre de séparation (3) présente essentiellement la forme d'un corps de rotation,
dans lequel le corps de rotation comporte une enveloppe (13) et deux faces de recouvrement (15, 15'),
dans lequel l'entrée de fluide (5) débouche dans la chambre de séparation (3) tangentiellement à la surface de l'enveloppe (15), et
dans lequel un tube plongeur (7) est disposé dans une première face de recouvrement (15) et l'autre tube plongeur (7') est disposé dans l'autre face de recouvrement (15'),
**caractérisé en ce que** l'ouverture d'extraction de particules (9, 9') s'étend radialement à la face de l'enveloppe du corps de rotation.

2. Dispositif de séparation selon la revendication 1, **caractérisé en ce que** le corps de rotation est un cylindre circulaire droit.

3. Dispositif de séparation selon la revendication 1 ou la revendication 2, **caractérisé en ce que** les tubes plongeurs (7, 7') sont disposés le long de l'axe de rotation (a) du corps de rotation, de préférence du cylindre circulaire, ou bien sont disposés de façon excentrique par rapport à l'axe de rotation (a) du corps de rotation, de préférence du cylindre circulaire.

4. Dispositif de séparation selon l'une quelconque des revendications 1 à 3, **caractérisé en ce que** les tubes plongeurs (7, 7') peuvent être ou sont reliés par un élément de filtre (20) dans la chambre de séparation (3).

5. Dispositif de séparation selon la revendication 4, **caractérisé en ce que** l'élément de filtre (20) est posé sur le côté intérieur ou sur le côté extérieur de l'enveloppe des tubes plongeurs.

6. Dispositif de séparation selon la revendication 4 ou la revendication 5, **caractérisé en ce que** l'élément de filtre (20) est un filtre à cartouche.

7. Dispositif de séparation selon l'une quelconque des revendications 1 à 6, **caractérisé en ce que** les tubes plongeurs (7, 7') sont réalisés en forme de cône ou en forme de trompette.

8. Dispositif de séparation selon l'une quelconque des revendications 1 à 7, **caractérisé en ce que** les tubes plongeurs (7, 7') présentent une section transversale circulaire.

9. Dispositif de séparation selon l'une quelconque des revendications 1 à 8, **caractérisé en ce que** l'ouverture d'extraction de particules (9, 9') s'étend le long de la totalité de l'enveloppe (13).

10. Dispositif de séparation selon l'une quelconque des revendications 1 à 9, **caractérisé en ce qu'**il est prévu plusieurs ouvertures d'extraction de particules (9, 9'), disposées de préférence de façon symétrique le long de l'enveloppe (13).

11. Dispositif de séparation selon l'une quelconque des revendications 1 à 10, **caractérisé en ce que** les tubes plongeurs (7, 7') débouchent dans un réservoir, qui entoure de préférence partiellement ou entièrement le séparateur centrifuge (2).

12. Dispositif de séparation selon l'une quelconque des revendications 1 à 11, **caractérisé en ce que** ladite au moins une ouverture d'extraction de particules (9, 9') débouche dans un réservoir de collecte (22) qui est relié de façon étanche au fluide à la chambre de séparation (3).

13. Dispositif de séparation selon l'une quelconque des revendications 3 à 12, **caractérisé en ce qu'**il est prévu un dispositif pour éliminer le gâteau de filtrage de l'élément de filtre (20).

14. Dispositif de séparation selon la revendication 13, **caractérisé en ce que** le dispositif pour éliminer le gâteau de filtrage présente un compresseur à air comprimé ou un accumulateur d'air comprimé qui est disposé après les tubes plongeurs (7, 7').

15. Dispositif de séparation selon la revendication 13, **caractérisé en ce que** le dispositif pour éliminer le gâteau de filtrage comporte une protubérance fixe ou rotative (41), qui est disposée à l'intérieur ou à l'extérieur de la chambre de séparation (3), dans lequel les tubes plongeurs (7, 7') sont montés de façon rotative ou sont installés de façon fixe le long de l'axe de rotation (a), dans lequel la protubérance (41) comprend éventuellement une brosse.
